# EUROPÄISCHE PATENTSCHRIFT

(11) **EP 3 964 903 B1**
(45) Veröffentlichungstag und Bekanntmachung des Hinweises auf die Patenterteilung: **09.08.2023**
(21) Anmeldenummer: 21178123.2
(22) Anmeldetag: 08.06.2021
(51) Int. Cl.: G05B 19/408, G05B 19/39

(54) **VORRICHTUNG UND VERFAHREN ZUR VERARBEITUNG VON ROTATIONSABHÄNGIGEN MESSWERTEN**
DEVICE AND METHOD FOR PROCESSING ROTATION-DEPENDENT MEASURED VALUES
DISPOSITIF ET PROCÉDÉ DE TRAITEMENT DES VALEURS MESURÉES DÉPENDANT DE LA ROTATION

(30) Priorität: 07.09.2020 DE 102020211215
(43) Veröffentlichungstag der Anmeldung: 09.03.2022
(73) Patentinhaber: Dr. Johannes Heidenhain GmbH, 83301 Traunreut (DE)
(72) Erfinder: JOACHIMSTHALER, Ingo, 83278 Traunstein (DE); SCHMIDT, Sebastian, 83413 Fridolfing (DE)

(56) Entgegenhaltungen:
- DE-A1- 10 200 682
- US-A1- 2003 179 104

## Beschreibung

### BEZEICHNUNG DER ERFINDUNG

Vorrichtung und Verfahren zur Verarbeitung von rotationsabhängigen Messwerten

### GEBIET DER TECHNIK

Die vorliegende Erfindung betrifft eine Vorrichtung zur Verarbeitung von rotationsabhängigen Messwerten nach Anspruch 1, sowie ein korrespondierendes Verfahren nach Anspruch 8.

### STAND DER TECHNIK

In der Automatisierungstechnik basieren viele Bewegungsabläufe auf rotierenden Wellen, die direkt oder indirekt von Elektromotoren angetrieben werden. Bereits ohne äußere Krafteinwirkung können rotierende Wellen Maschinenkomponenten beeinflussen, beispielsweise indem durch eine Unwucht mechanische Schwingungen verursacht werden. Wirken dann auch noch äußere Kräfte auf die Welle ein, dann werden derartige Effekte noch um ein Vielfaches verstärkt, insbesondere wenn Resonanzfrequenzen von Maschinenkomponenten betroffen sind.

Ein besonders sensibles technisches Gebiet ist hierbei die hochgenaue Bearbeitung von Werkstücken in Werkzeugmaschinen. Hier ist die Motorspindel eine kritische Komponente, da sie eine Welle umfasst, die mit verschiedenen Drehzahlen betrieben wird und die, je nach Bearbeitungsschritt mit hohen seitlichen und dynamisch veränderlichen Kräften beaufschlagt wird.

Nimmt man eine Fräsbearbeitung als Beispiel, so treten im Betrieb durch die spanabhebende Bearbeitung Kräfte auf, die durch die Vorschubgeschwindigkeit und auch durch die Anzahl und den Zustand der Schneiden des verwendeten Fräswerkzeugs beeinflusst werden. Diese bewirken eine dynamische Verbiegung der Welle, die verschiedenste negative Auswirkungen auf die Werkzeugmaschine haben können.

Um derartige Auswirkungen analysieren zu können, kommen verschiedenste Sensoren zum Einsatz, beispielsweise Beschleunigungs- oder Körperschallsensoren zum Erfassen von Vibrationen oder Dehnungsmessstreifen zum Nachweis von Verbiegungen.

Die EP 2 924 526 A1 beschreibt ein Verfahren zum Überwachen von Betriebsparametern von Werkzeugmaschinen. Hierzu werden in konstanten Zeitabständen Messungen mittels Sensoren vorgenommen und die Messwerte grafisch dargestellt. Nachteilig an diesem Verfahren ist, dass insbesondere bei niedrigen Drehzahlen sehr viele Messwerte je Umdrehung der Welle gemessen werden und so die Auswertung sehr speicher- und rechenintensiv ist.

Die DE 102 00 682 A1 beschreibt ein Verfahren zur Aufzeichnung eines Prozesssignals eines Systems, bei dem die Aufzeichnung durch ein anderes als den Zeittakt des Systems vorgegebenen zweiten Prozesssignals erfolgt. Die Aufzeichnung erfolgt somit in unregelmäßigen Zeitabständen.

### ZUSAMMENFASSUNG DER ERFINDUNG

Es ist eine Aufgabe der vorliegenden Erfindung, eine Vorrichtung anzugeben, die Ergebnisdaten bereitstellt, die eine einfache Auswertung des Einflusses einer rotierenden Welle auf Maschinenkomponenten erlauben.

Diese Aufgabe wird gelöst durch eine Vorrichtung nach Anspruch 1.

Es wird nun eine Vorrichtung zur Verarbeitung von rotationsabhängigen Messwerten vorgeschlagen, umfassend einen Datenkonverter, eine Ablaufsteuerung und eine Ausgabeschnittstelle, wobei
- die Ablaufsteuerung in konstanten Zeitabständen eines Messintervalls Messpulse generiert,
- dem Datenkonverter in den konstanten zeitlichen Abständen des Messintervalls Reihen von Messwerten zuführbar sind, die von der Rotation einer Welle abhängig sind und von denen wenigstens einer ein Winkelwert ist, der die Winkelposition der Welle angibt,
- der Datenkonverter ausgestaltet ist, eine Umdrehung der Welle in n Sektoren zu unterteilen und, unter Verwendung eines der Winkelwerte als Referenz-Winkelwert, eintreffende Messwerte einem Sektor zuzuordnen und je Umdrehung der Welle für jede Reihe von Messwerten für jeden Sektor genau einen Ergebniswert zu ermitteln und
- die Ergebniswerte an die Ausgabeschnittstelle ausgebbar sind.

Weiter ist es eine Aufgabe der vorliegenden Erfindung, ein Verfahren anzugeben, um Ergebnisdaten zu erlangen, die eine einfache Auswertung des Einflusses einer rotierenden Welle auf Maschinenkomponenten erlauben. Diese Aufgabe wird gelöst durch ein Verfahren nach Anspruch 8.

Es wird nun ein Verfahren zum Betreiben einer Vorrichtung zur Verarbeitung von rotationsabhängigen Messwerten, die einen Datenkonverter, eine Ablaufsteuerung und eine Ausgabeschnittstelle umfasst, vorgeschlagen, wobei
- von der Ablaufsteuerung in konstanten Zeitabständen eines Messintervalls Messpulse generiert werden,
- dem Datenkonverter in den konstanten zeitlichen Abständen des Messintervalls Reihen von Messwerten zugeführt werden, die von der Rotation einer Welle abhängig sind und von denen wenigstens einer ein Winkelwert ist, der die Winkelposition der Welle angibt,
- im Datenkonverter eine Umdrehung der Welle in n Sektoren unterteilt wird und, unter Verwendung eines der Winkelwerte als Referenz-Winkelwert, eintreffende Messwerte einem Sektor zugeordnet werden und je Umdrehung der Welle für jede Reihe von Messwerten für jeden Sektor genau einen Ergebniswert ermittelt wird und
- die Ergebniswerte an die Ausgabeschnittstelle ausgegeben werden.

Weitere Vorteile einer erfindungsgemäßen Vorrichtung, bzw. eines erfindungsgemäßen Verfahrens sind den abhängigen Ansprüchen oder den beschriebenen Ausführungsbeispielen zu entnehmen.

### KURZE BESCHREIBUNG DER ZEICHNUNGEN

Es zeigt
- Figur 1: eine vereinfachte Darstellung einer Werkzeugmaschine mit einer Motorspindel,
- Figur 2: eine Ausführungsform einer erfindungsgemäßen Vorrichtung,
- Figur 3: ein Signaldiagramm zur Ausführungsform von Figur 2,
- Figur 4: Wertetabellen zur Veranschaulichung erfindungsgemäßer Verfahren,
- Figur 5A: eine alternative Ausführungsform einer Messanordnung,
- Figur 5B: eine weitere Ausführungsform einer Messanordnung,
- Figur 5C: eine weitere Ausführungsform einer Messanordnung,
- Figur 6A: eine alternative Ausführungsform einer Messanordnung,
- Figur 6B: eine weitere Ausführungsform einer Messanordnung,
- Figur 7: eine weitere Ausführungsform einer erfindungsgemäßen Vorrichtung und
- Figur 8: eine weitere Ausführungsform einer erfindungsgemäßen Vorrichtung.

### BESCHREIBUNG DER AUSFÜHRUNGSFORMEN

In der nachfolgenden Beschreibung von vorteilhaften Ausführungsformen der vorliegenden Erfindung werden Bezugszeichen von Komponenten und Funktionsgruppen, die in einer Figur beschrieben werden, in den nachfolgenden Figuren beibehalten.

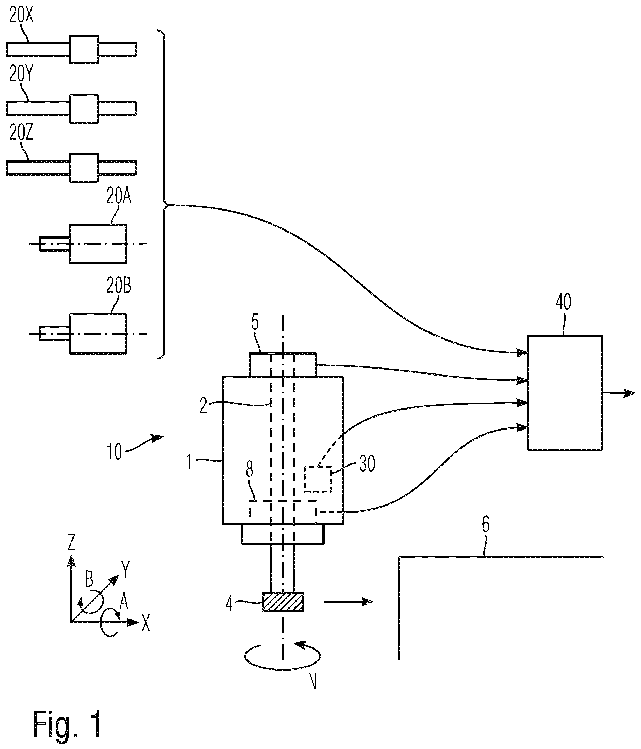

Figur 1 zeigt in vereinfachter Weise eine Werkzeugmaschine mit einer Motorspindel 10. Die zentrale Komponente ist ein Spindelmotor 1 mit einer Welle 2. An einem Ende der Welle 2 ist ein Werkzeug 4 (beispielsweise ein Fräswerkzeug) angeordnet. Für die Befestigung des Werkzeugs 4 an der Welle 2 ist eine (nicht dargestellte) Werkzeugaufnahme vorgesehen, beispielsweise ein Spannfutter oder ein Hohlschaftkegel. Ebenso mechanisch mit der Welle 2 gekoppelt ist ein Winkelmessgerät 5 (Drehgeber). Die Kopplung erfolgt über eine (nicht dargestellte) mechanische Kupplung, die eine drehbare Welle des Winkelmessgerätes 5 mit der Welle 2 verbindet. Auf diese Weise sind Winkelposition und/oder Anzahl der zurückgelegten Umdrehungen der Welle 2 mit dem Winkelmessgerät 5 messbar. Die Lagerung der Welle 2 im Gehäuse des Spindelmotors 1 erfolgt über Wälzlager.

Während der Bearbeitung eines Werkstücks 6 dreht sich die Welle 2 mit einer variablen Drehzahl N und das Werkzeug 4 wird durch eine Relativbewegung der Motorspindel 10 bezogen auf das Werkstück 6 mit diesem in Kontakt gebracht. So wird beispielsweise bei einer Fräsbearbeitung die gewünschte Kontur aus dem Werkstück 6 gefräst. Die Relativbewegung kann entlang linearer Antriebsachsen X, Y, Z erfolgen, zusätzlich können auch sogenannte Schwenkachsen A, B vorgesehen sein, so dass im dargestellten Beispiel eine Bewegung in fünf Bewegungsachsen X, Y, Z, A, B möglich ist. Die Bewegung der einzelnen Achsen wird über (nicht dargestellte) Servoantriebe, die wiederum entsprechende mechanische Komponenten antreiben, gesteuert. Zur Feststellung der Position der jeweiligen Bewegungsachsen X, Y, Z, A, B sind in der Werkzeugmaschine weitere Positionsmesseinrichtungen 20X, 20Y, 20Z, 20A, 20B vorgesehen.

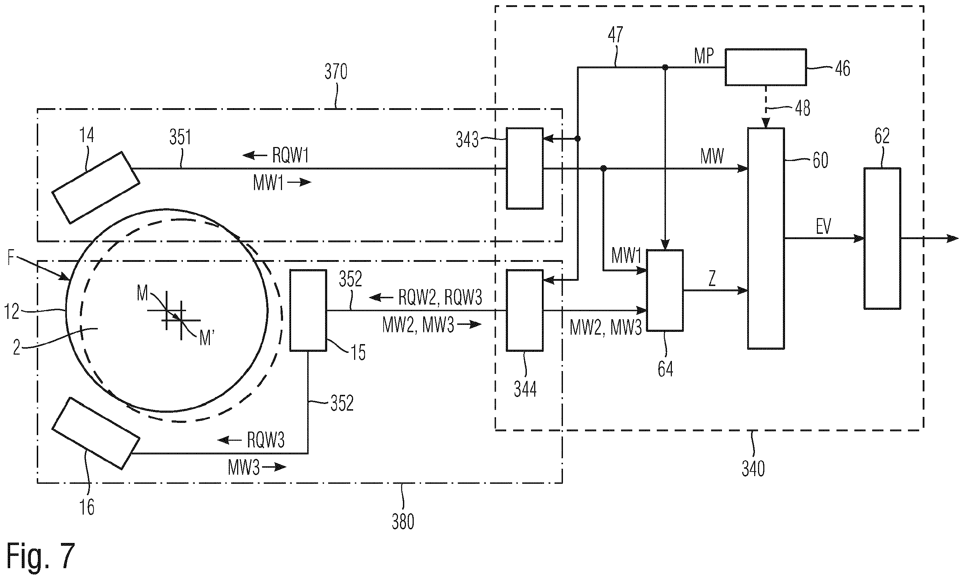

Weiter kann in der Motorspindel 10 eine Mehrfach-Positionsmesseinrichtung 8 vorgesehen sein, deren Aufbau und Funktion in Verbindung mit Figur 7 erläutert wird.

Die Rotation der Welle 2 kann vielfältige Auswirkungen auf den Betrieb der Werkzeugmaschine haben. Bereits ohne Kontakt des Werkzeugs 4 mit dem Werkstück 6 können, bedingt durch eine Unwucht der Welle, Lagerspiel der Wälzlager, Exzentrizitätsfehler, etc., drehzahlabhängige Vibrationen auftreten. Durch die auf das Werkzeug 4 bei der Bearbeitung des Werkstücks 6 einwirkenden Kräfte zeigen sich noch gravierendere Auswirkungen auf die Werkzeugmaschine, häufig ebenfalls in Form von mechanischen Schwingungen.

Außerdem ist in der Motorspindel 10 ein Sensor 30 vorgesehen, mit dem weitere Maschinenzustände messbar sind. Hierbei kann es sich um einen Beschleunigungssensor, Vibrationssensor, Körperschallsensor, Dehnungsmessstreifen, Messwiderstand zur Strommessung etc. handeln. Die Messwerte des Winkelmessgeräts 5, der Positionsmesseinrichtungen 20X, 20Y, 20Z, 20A, 20B, der Mehrfach-Positionsmesseinrichtung 8 und des Sensors 30 sind über geeignete Kabel zu einem Steuergerät 40 übertragbar. Das Steuergerät 40 weist Schnittstellen zum Anschluss der Kabel auf und dient der Erfassung und Verarbeitung der Messwerte.

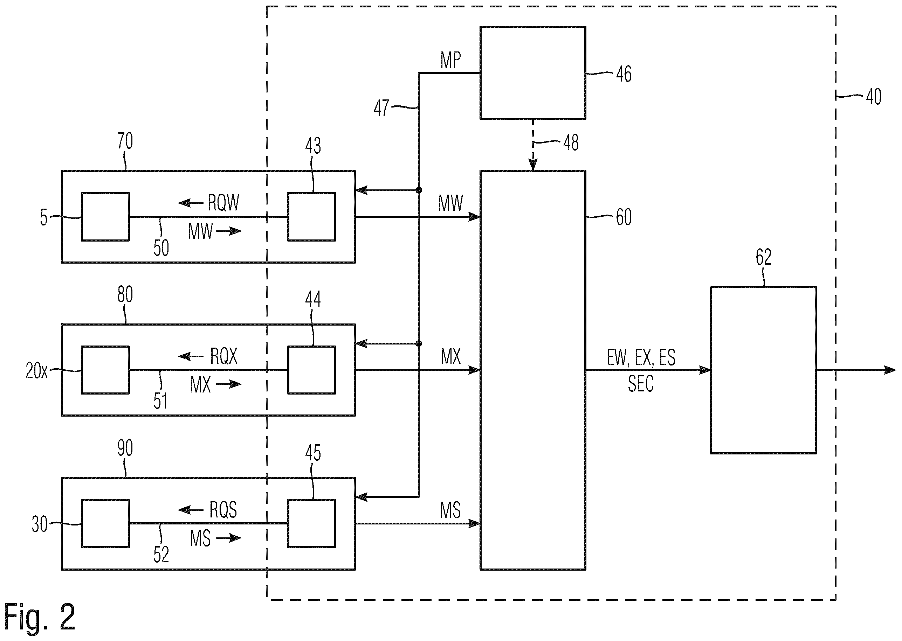

Figur 2 zeigt, basierend auf der in Figur 1 gezeigten Maschinenarchitektur, eine Ausführungsform einer erfindungsgemäßen Vorrichtung.

Eine Kernfunktion der erfindungsgemäßen Vorrichtung ist die Verarbeitung von Reihen von rotationsabhängigen Messwerten. Das sind Messwerte, die von der Rotation der Welle 2 beeinflussbar sind. Das sind, neben offensichtlichen Auswirkungen wie die Änderung der Winkelposition der Welle 2 selbst, insbesondere Messwerte, die durch Kräfte, die von der rotierenden Welle 2 selbst erzeugt werden oder während des Betriebs der Maschine auf die Welle 2 einwirken, beeinflusst werden. Zur Messung und Bereitstellung von Messwerten sind verschiedene Messanordnungen vorgesehen. Eine erste Messanordnung 70, ist geeignet, die Winkelposition der Welle 2 zu messen. Sie umfasst das Winkelmessgerät 5, einen Datenübertragungskanal 50 und eine Datenschnittstelle 43. Daneben sind zwei weitere Messanordnungen 80, 90 vorgesehen, eine zweite Messanordnung 80, die stellvertretend für die in Figur 1 dargestellten Positionsmesseinrichtungen 20X, 20Y, 20Z, 20A, 20B die Positionsmesseinrichtung 20X zur Messung von Bewegungen in Richtung der Bewegungsachse X umfasst und eine dritte Messanordnung 90, mit dem (in diesem Beispiel digitalen) Sensor 30 als Messvorrichtung. Auch die zweite Messanordnung 80 und die dritte Messanordnung 90 weisen je einen Datenübertragungskanal 51, 52 und eine Datenschnittstelle 44, 45 auf.

Die Auswahl der Positionsmesseinrichtung 20X ist willkürlich und nicht einschränkend. Selbstverständlich kann jede Positionsmesseinrichtung 20X, 20Y, 20Z, 20A, 20B, die auf ihre Beeinflussung durch die rotierende Welle 2 untersucht werden soll, als messende Einheit in einer weiteren Messanordnung eingesetzt werden.

Eine Messanordnung im Rahmen der vorliegenden Erfindung umfasst jeweils alle notwendigen Komponenten, um, ausgelöst durch ein externes Signal, Messungen durchzuführen und ermittelte Messwerte digital bereitzustellen, bzw. auszugeben. Der Aufbau umfasst jeweils wenigstens eine Messvorrichtung, einen Übertragungskanal und eine Schnittstelle. Mit der wenigstens einen Messvorrichtung ist wenigstens eine zu untersuchende Messgröße erfassbar und über den Übertragungskanal, je nach Ausführung der Messvorrichtung in Form von digitalen Messwerten und/oder auszuwertenden Messsignalen, der Schnittstelle zuführbar.

In der ersten Messanordnung 70 ist mit dem Winkelmessgerät 5 die Winkelposition der Welle 2 messbar. Es ist als sogenanntes absolutes Winkelmessgerät ausgeführt. Das Initiieren einer Winkelmessung erfolgt durch Senden eines Anforderungsbefehls RQWvon der Datenschnittstelle 43 über den Datenübertragungskanal 50 an das Winkelmessgerät 5. Die Übertragung des resultierenden Winkelwerts MW erfolgt in entgegengesetzter Richtung vom Winkelmessgerät 5 über den Datenübertragungskanal 50 zur Datenschnittstelle 43.

Analog hierzu ist in der zweiten Messanordnung 80 mit der Positionsmesseinrichtung 20X ein Positionswert MX messbar und zur und über den Datenübertragungskanal 51 zur Datenschnittstelle 44 übertragbar. Die Messung wird durch einen Anforderungsbefehl RQX initiiert.

Der Sensor 30 in der dritten Messanordnung 90 ist als digitaler Sensor ausgeführt, eine Messung erfolgt demnach ebenfalls auf das Eintreffen eines Anforderungsbefehls RQS, die Übertragung zur Datenschnittstelle 45 erfolgt über den Datenübertragungskanal 52.

Das Steuergerät 40 umfasst eine Ablaufsteuerung 46, einen Datenkonverter 60, sowie eine Ausgabeschnittstelle 62. Darüber hinaus sind die Datenschnittstellen 43-45 der Messanordnungen 70, 80, 90 Teil des Steuergerätes 40.

Im dargestellten Beispiel sind alle Datenschnittstellen für eine Punkt-zu-Punkt-Datenübertragung ausgelegt, d.h. die Datenschnittstellen 43-45 kommunizieren über die entsprechenden Datenübertragungskanäle 50-52 mit den angeschlossenen digitalen Messvorrichtungen (dem Winkelmessgerät 5, der Positionsmessanordnung 20X und dem Sensor 30).

Die Ablaufsteuerung 46 erzeugt in konstanten Zeitabständen Messpulse MP und führt sie über eine Signalleitung 47 den Messanordnungen 70, 80, 90 zu. Die Datenschnittstellen 43-45 fordern daraufhin über die Datenschnittstellen 43, 44, 45 durch Senden der Anforderungsbefehle RQW, RQX, RQS an das Winkelmessgerät 5, die Positionsmesseinrichtung 20X, sowie dem Sensor 30, Messwerte an. Messwerte MW, MX, MS, die als Folge der Anforderungsbefehle RQW, RQX, RQS bei den jeweiligen Datenschnittstellen 43, 44, 45 eintreffen, werden dem Datenkonverter 60 zugeführt. Durch diese Vorgehensweise entstehen Reihen von Messwerten, bei denen die einzelnen Messwerte MW, MX, MS der Messanordnungen 70, 80, 90 weitgehend zeitgleich gemessen werden. Die Messwerte MW, MX, MS sind also zeitbasiert.

Es sei an dieser Stelle darauf hingewiesen, dass es kein Erfordernis ist, dass gleiche Datenschnittstellen eingesetzt werden. Geeignet sind vielmehr alle Datenschnittstellen, die Anforderungsbefehle unterstützen, wobei ein Anforderungsbefehl durch ein beliebiges Signal oder eine beliebige Signalfolge repräsentiert sein kann. Auch das Medium, aus dem der Datenübertragungskanal 50, 51, 52 gebildet ist, ist beliebig. So kann es sich um elektrische Leitungen, Lichtleiter oder eine drahtlose Verbindung handeln. Im Fall von elektrischen Leitungen kann die Signalübertragung differentiell erfolgen, beispielsweise nach dem bekannten RS-485-Standard. Demzufolge kann ein Leitungspaar für einen bidirektional betriebenen Datenkanal und ggf. ein weiteres Leitungspaar für einen Taktsignalkanal vorgesehen sein.

Im Datenkonverter 60 erfolgt nun eine Konvertierung der in den Messanordnungen 70, 80, 90 generierten zeitbasierten Messwerte in winkelbasierte, virtuelle Ergebniswerte. Hierzu wird eine Umdrehung der Welle 2 in eine Anzahl von n Sektoren aufgeteilt und für jeden der n Sektoren ein virtueller, winkelbasierter Messwert bestimmt. Als Referenz für die aktuelle Winkelposition der Welle 2, die der Zuordnung des jeweils aktuellen Sektors zugrunde liegt, dient der Messwert MW der Messanordnung 70.

Die Ergebniswerte werden an die Ausgabeschnittstelle 62 ausgegeben, von der sie an eine Folgeelektronik zur weiteren Auswertung ausgebbar sind. Mit Vorteil sind die Ergebniswerte in der Ausgabeschnittstelle 62 speicherbar, so dass die Ausgabe auch zu einem späteren Zeitpunkt erfolgen kann.

Zusammengefasst bildet das Steuergerät 40 ein Messmodul, das Schnittstellen für den Anschluss von Messvorrichtungen mittels geeigneter Übertragungskanäle aufweist, sowie Verarbeitungsmittel zur erfindungsgemäßen Verarbeitung gemessener Messwerte zu Ergebniswerten und eine Ausgabeschnittstelle zu deren Ausgabe. Das Steuergerät 40 kann dabei ein eigenständiges Gerät sein, es kann aber auch als Messmodul in einer Maschinensteuerung ausgeführt sein.

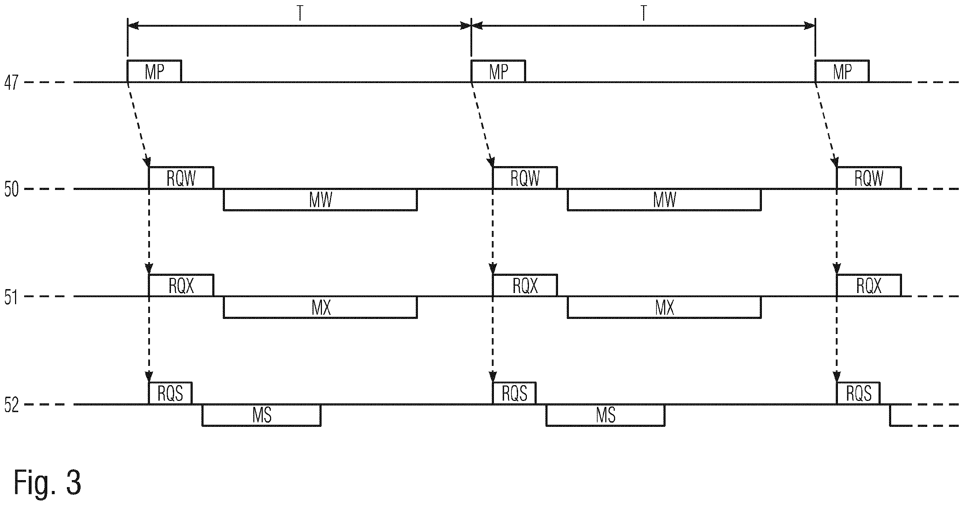

Figur 3 zeigt ein Signaldiagramm zur in Figur 2 dargestellten Ausführungsform.

Die oberste Zeile des Signaldiagramms zeigt die Messpulse MP, die in konstanten Messintervallen T über die Signalleitung 47 von der Ablaufsteuerung 46 an die Messanordnungen 70, 80, 90 ausgegeben werden. Das Eintreffen eines Messpulses MP kann jeweils durch Überwachung einer Signaleigenschaft, beispielsweise das Eintreffen einer definierten Signalflanke oder eine Änderung des Signalpegels, erkannt werden.

Die folgenden Zeilen zeigen symbolisch die auf das Eintreffen der Messpulse MP folgende Kommunikation innerhalb der Messanordnungen 70, 80, 90 über die Datenübertragungskanäle 50-52, wobei im Bereich oberhalb der Nulllinie Signale in Richtung des Winkelmessgeräts 5, der Positionsmesseinrichtung 20X und des Sensors 30 dargestellt sind, während unterhalb der Nulllinie Signale in Richtung der Datenschnittstellen 43-45 gezeigt sind. Der Darstellung kann weder eine Signalpolarität, noch die Anzahl der für die Übertragung vorgesehenen Leitungen entnommen werden.

Trifft ein Messpuls MP ein, so schicken die Datenschnittstellen 43-45 unmittelbar über die Datenübertragungskanäle 50-52 Anforderungsbefehle RQW, RQX, RQS an die korrespondierenden Messvorrichtungen, nämlich das Winkelmessgerät 5, die Positionsmesseinrichtung 20X und den Sensor 30. Diese führen daraufhin, ebenfalls quasi-gleichzeitig, Messungen durch und generieren Messwerte - einen Winkelwert MW, einen Positionswert MX und einen Sensorwert MS - die sie an Datenschnittstellen 43-45 übertragen.

Die Art der Anforderungsbefehle RQW, RQX, RQS ist schnittstellenspezifisch. Es sind Datenschnittstellen bekannt, bei denen Anforderungsbefehle RQW, RQX, RQS, wie in der Figur 3 dargestellt, definierte Datenworte (Befehlsworte) sind. Bei anderen Datenschnittstellen wird bereits das Eintreffen einer Signalflanke als Anforderungsbefehl RQW, RQX, RQS interpretiert.

Die Messwerte MW, MX, MS werden von den Messanordnungen 70, 80, 90 zur weiteren Verarbeitung an den Datenkonverter 60 ausgegeben.

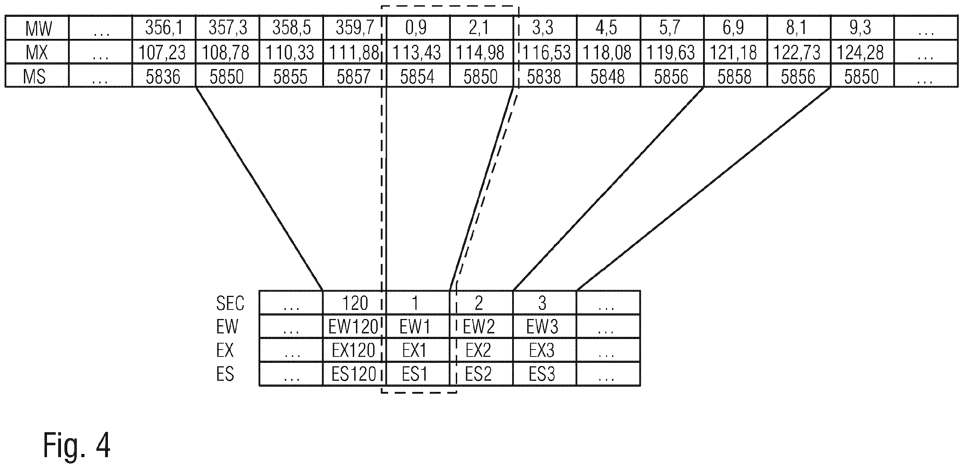

Im Datenkonverter 60 erfolgt die Ermittlung von Ergebniswerten, basierend auf den eintreffenden Messwerten MW, MX, MS. Geeignete und bevorzugte Verfahren hierzu werden im Folgenden anhand der Figur 4 beschrieben.

Figur 4 zeigt eine erste Tabelle, die aufeinanderfolgend gemessene Messwerte MW, MX, MS enthält, wobei Winkelwerte MW in der Einheit "Grad [°]" (Winkel) und Positionswerte MX in der Einheit "Millimeter [mm]" angegeben sind und Sensorwerte MS einheitenlos angenommen werden, beispielsweise als ganze Zahlen mit einem Wertebereich von 16 Bit. Weiter zeigt Figur 4 eine zweite Tabelle, die Ergebniswerte EW, EX, ES enthält, die vom Datenkonverter aus den Werten der ersten Tabelle ermittelt werden.

Für die folgenden Ausführungen wird angenommen, dass eine Umdrehung der Welle 2 in 120 gleiche Sektoren SEC unterteilt ist. Jeder Sektor SEC umfasst somit einen Winkelbereich von 3°. Welchem Sektor SEC aktuell gemessene Messwerte MW, MX, MS zuzuordnen sind, bestimmt der Winkelwert MW, der als Referenz-Winkelwert dient. So sind beispielsweise die Winkelwerte MW mit den Tabellenwerten 0,9° und 2,1° dem Sektor 1 zugeordnet, woraus wiederum folgt, dass auch die Positionswerte MX mit den Tabellenwerten 113,43 mm und 114,98 mm und die Sensorwerte MS mit den Tabellenwerten 5854 und 5850 dem Sektor 1 zuzuordnen sind, da diese jeweils zum gleichen Zeitpunkt wie die korrespondierenden Winkelwerte MW gemessen wurden.

Erfindungsgemäß ermittelt der Datenkonverter 60 nun wenigstens aus der Messreihe einer der Messanordnungen 70, 80, 90 je Sektor SEC einen Ergebniswert. Analog zu den Messwerten (Winkelwert MW, Positionswert MX, Sensorwert MS) tragen die Ergebniswerte die Bezugszeichen EW, EX und ES, jeweils ergänzt durch die Sektornummer.

Folgende Verfahren zur Ermittlung der Ergebniswerte haben sich als besonders vorteilhaft erwiesen:
Ein erstes Verfahren besteht in der Wahl des ersten Messwerts nach (oder des letzten Messwerts vor) einem Sektorwechsel als Ergebniswert EW, EX, ES. Dieses Verfahren ist besonders einfach, da keine Berechnung erforderlich ist. Es ist vorteilhaft, wenn das Messintervall T so gewählt ist, dass im laufenden Betrieb eine Vielzahl von Messwerten MW, MX, MS je Sektor SEC gemessen werden. Im dargestellten einfachen Beispiel ergibt sich beispielsweise bei Wahl des ersten Messwerts nach einem Sektorwechsel bei positiver Drehrichtung für den Sektor SEC = 1 ein Winkelergebniswert EW1 = 0,9°, ein Positionsergebniswert EX1 = 113,43 mm und für den Sensorergebniswert ES1 = 5854.

Bei einem zweiten Verfahren wird jeweils der Mittelwert aus allen Messwerten MW, MX, MS innerhalb eines Sektors SEC als Ergebniswert EW, EX, ES gebildet. Dieses Verfahren ist anwendbar, wenn je Sektor SEC wenigstens zwei Messwerte MW, MX, MS gemessen werden. Der besondere Vorteil dieses Verfahrens ist es, dass eine Tiefpassfilterung der Messwerte MW, MX, MS erreicht wird. Hier ergibt sich für Sektor SEC = 1 ein Winkelergebniswert EW1 = 1,5°, ein Positionsergebniswert EX1 = 114,205 mm und für den Sensorergebniswert ES1 = 5852.

Ein drittes Verfahren basiert auf der Berechnung eines virtuellen Messwertes bezogen auf die Winkelposition in der Mitte des aktuellen Sektors SEC aus wenigstens zwei Messwerten MW, MX, MS innerhalb des Sektors SEC als Ergebniswert EW, EX, ES. Hier können geeignete Rechenverfahren, insbesondere Interpolationsverfahren wie lineare Interpolation, Polynominterpolation, Spline-Interpolation, etc. zum Einsatz kommen. Dieses Verfahren reduziert Sprünge zwischen den Ergebniswerten EW, EX, ES, die auf der asynchronen Messung der Messwerte MW, MX, MS in Bezug auf die Drehbewegung der Welle 2 resultieren (Jitter) und ist deshalb sehr präzise. Bei linearer Interpolation ergibt sich im Beispiel für Sektor SEC = 1 ein Winkelergebniswert EW1 = 1,5°, ein Positionsergebniswert EX1 = 114,205 mm und für den Sensorergebniswert ES1 = 5852, berechnet für den Sektormittelpunkt bei 1,5°.

Bei allen Verfahren erfolgt die Zuordnung der Messwerte MW, MX, MS zu Sektoren SEC basierend auf dem von der Messanordnung 70 gemessenen Winkelwert MW als Referenz-Winkelwert.

Die ermittelten und bereitgestellten Ergebniswerte EW, EX, ES können über die Ausgabeschnittstelle 62 zur weiteren Auswertung an eine (nicht dargestellte) Folgeelektronik ausgegeben werden. Alternativ kann die Ausgabeschnittstelle 62 als Grafik-Schnittstelle ausgeführt sein, an die ein Anzeigegerät, z.B. ein Monitor anschließbar ist und auf dem der Verlauf der Ergebniswerte EW, EX, ES grafisch anzeigbar ist. In diesem Fall kann der Verlauf der Ergebniswerte EW, EX, ES von einem Beobachter visuell ausgewertet, bzw. beurteilt werden.

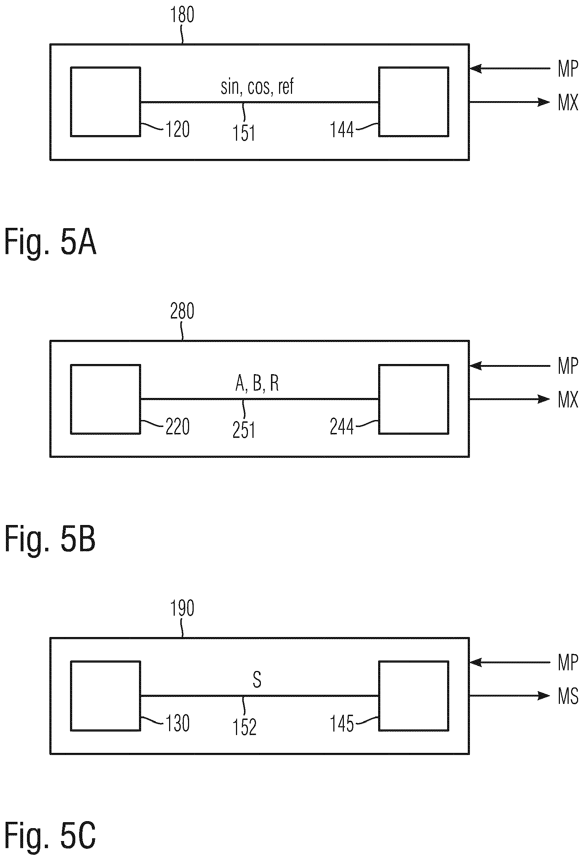

Die Figuren 5A bis 5C zeigen weitere vorteilhafte Ausführungsformen von Messanordnungen. Dabei können die in den Figuren 5A und 5B dargestellten Messanordnungen beispielsweise die Messanordnung 80 aus Figur 2 ersetzen, Figur 5C kann an Stelle der Messanordnung 90 eingesetzt werden.

Die Messanordnung 180, die in Figur 5A dargestellt ist, umfasst einen Inkrementalgeber 120, dessen analoge Positionssignale sin, cos, ref über einen Signalübertragungskanal 151 einer Verarbeitungsschnittstelle 144 zugeführt sind. Der Inkrementalgeber 120 kann als Winkelmessgerät (Drehgeber) oder als Längenmessgerät ausgeführt sein.

Die Positionssignale sin, cos, ref des Inkrementalgebers 120 entstehen, wie im Stand der Technik bekannt, durch Abtastung einer regelmäßigen Teilungsstruktur. Die Positionssignale sin, cos sind bei konstanter Drehzahl bzw. Verfahrgeschwindigkeit weitgehend sinusförmig und weisen eine Phasenverschiebung von 90° zueinander auf. Die Anzahl der Teilungsperioden der Teilungsstruktur entspricht der Anzahl von Signalperioden der Positionssignale sin, cos. Somit ist durch Auswertung der Positionssignale sin, cos, in Verbindung mit dem Positionssignal ref, das eine Referenzposition festlegt, eine Positionsbestimmung möglich.

Die Verarbeitungsschnittstelle 144 ermittelt durch Auswertung (Zählung) der Signalperioden und ggf. Bruchteilen der Signalperioden (Interpolation) der Positionssignale sin, cos den aktuellen Positionswert MX bezogen auf die Referenzposition.

Trifft nun ein Messpuls MP ein, so gibt die weitere Messanordnung 180 über die Verarbeitungsschnittstelle 144 den aktuellen Positionswert MX aus.

Die Messanordnung 280, die in Figur 5B dargestellt ist, umfasst ebenfalls einen Inkrementalgeber 220. Im Unterschied zu Figur 5A gibt dieser jedoch digitale Positionssignale A, B, R über einen Signalübertragungskanal 251 an eine Verarbeitungsschnittstelle 244 aus.

Die Positionssignale A, B sind rechteckförmig und wiederum zueinander um 90° phasenverschoben. Das Positionssignal R dient zur Feststellung der Referenzposition und ist in diesem Fall ebenfalls rechteckförmig.

Die Verarbeitungsschnittstelle 244 ermittelt durch Zählen der Signalperioden oder Signalflanken der Positionssignale A, B, bezogen auf die Referenzposition, den aktuellen Positionswert MX.

Auch hier gibt die weitere Messanordnung 280 über die Verarbeitungsschnittstelle 244 nach Eintreffen eines Messpulses MP den aktuellen Positionswert MX aus.

Die weitere Messanordnung 190 aus Figur 5C umfasst einen analogen Sensor 130, dessen analoges Sensorsignal S über einen Signalübertragungskanal 152 einer Verarbeitungsschnittstelle 145 zugeführt ist.

Der analoge Sensor 130 kann ein beliebiges Bauteil oder eine elektrische Schaltung umfassen, die eine zu messende Größe in ein elektrisches Signal umsetzt. Er kann veränderliche Widerstände, beispielsweise Dehnungsmessstreifen (DMS) oder auch konstante Messwiderstände, beispielsweise zur Messung des Motorstroms des Spindelmotors 1 enthalten.

Die Verarbeitungsschnittstelle 145 ist geeignet ausgestaltet, um, wiederum nach Eintreffen des Messpulses MP, aus dem Sensorsignal S den Sensorwert MS zu generieren und auszugeben. Hierfür kann ein A/D-Wandler, sowie eine Rechenschaltung vorgesehen sein.

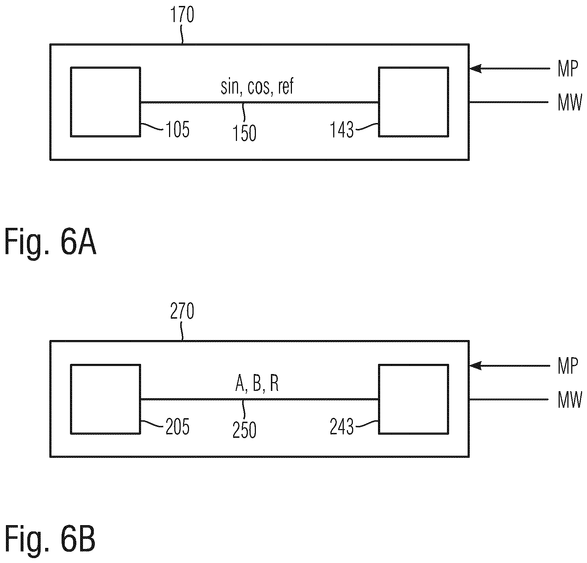

Die Figuren 6A und 6B zeigen alternative Ausführungsformen von Messanordnungen, die Messanordnung 70 aus Figur 2 ersetzen können.

Die in Figur 6A dargestellte Messanordnung 170 entspricht der in Figur 5A dargestellten Messanordnung 180. Da diese Messanordnung jedoch der Messung der Winkelposition der Welle 2 dient, ist die Messvorrichtung in diesem Fall auf einen Inkrementaldrehgeber 105 eingeschränkt, dessen analoge Positionssignale sin, cos, ref über einen Signalübertragungskanal 150 einer Verarbeitungsschnittstelle 143 zugeführt sind. Analog zur Messanordnung 70 gibt die Messanordnung 170 in Folge eines Eintreffens eines Messpulses MP einen Winkelwert MW aus.

Im Vergleich zu Figur 6A und analog zu Figur 5B umfasst die Messanordnung 270 einen Inkrementaldrehgeber 205, der digitale Positionssignale A, B, R über einen Signalübertragungskanal 250 an eine Verarbeitungsschnittstelle 243 ausgibt. Auch hier bewirkt das Eintreffen eines Messpulses MP die Ausgabe eines Winkelwerts MW.

Figur 7 zeigt den prinzipiellen Aufbau der Mehrfach-Positionsmesseinrichtung 8. Sie umfasst eine Messteilung 12 und drei Abtastköpfe 14, 15, 16.

Die Messteilung 12 ist ringförmig über den Umfang der Welle 2 angeordnet und mit dieser drehfest verbunden. Sie kann direkt auf die Welle 2 aufgebracht sein, beispielsweise in Form einer Abfolge magnetischer Bereiche. Alternativ ist sie auf einem Teilungsträger angeordnet, der wiederum mit der Welle 2 verbunden ist. Dreht sich die Welle 2, so bewegt sich die Messteilung 12 an den Messköpfen 14, 15, 16 vorbei.

Die Abtastköpfe 14, 15, 16 sind bezogen auf die Welle 2 statisch montiert, beispielsweise indem sie mit einem Gehäuse der Motorspindel 10 verbunden sind. Als Träger für die Abtastköpfe 14, 15, 16 kann ein weitgehend ringförmiges Trägerelement vorgesehen sein, das die Welle 2 umschließt. Mit Vorteil sind die Abtastköpfe 14, 15, 16 in regelmäßigen Winkelabständen über den Umfang der Welle 2 verteilt angeordnet, so dass sich bei drei Abtastköpfen 14, 15, 16 ein idealer (aber nicht zwingend erforderlicher) Winkelabstand von 120° ergibt.

In einer einfacheren Variante können auch nur zwei Messköpfe verwendet werden, in diesem Fall ist ein Winkelabstand von 180° bevorzugt.

Die Abtastköpfe 14, 15, 16 sind geeignet ausgestaltet, um die Messteilung 12 abzutasten und hieraus positionsabhängige Signale zu gewinnen, aus denen die Winkelposition der Welle 2 bestimmbar ist. Es sind verschiedene physikalische Abtastprinzipien bekannt, die hier zum Einsatz kommen können, insbesondere magnetische, optische oder induktive.

Im dargestellten Beispiel sind die Abtastköpfe 14, 15, 16 in Verbindung mit der Messteilung 12 als absolute Messvorrichtungen ausgeführt, d.h. aus der Abtastung der Messteilung 12 mit den Abtastköpfen 14, 15, 16 resultieren digitale Winkelwerte MW1, MW2, MW3.

In einer idealen Anordnung und bei einem perfekten Rundlauf der Welle 2 messen die Abtastköpfe 14, 15, 16 die gleiche Winkelposition, bzw. weisen die gemessenen Winkelwerte MW2, MW3 der Abtastköpfe 15, 16, bezogen auf den Winkelwert MW1 des ersten Abtastkopfes 14 einen konstanten Offset von 120°, bzw. 240° auf.

In einem realen Betrieb dagegen, beispielsweise während einer Fräsbearbeitung des Werkstücks 6 mit der Motorspindel 10, wirken Kräfte in radialer Richtung auf die Welle 2 und lenken diese in Bezug auf die feststehenden Abtastköpfe 14, 15, 16 aus (in Figur 7 ist stellvertretend für den komplexen Kräfteverlauf, der sich während des Bearbeitungsvorgangs bei rotierender Welle 2 ergibt, lediglich symbolisch ein Kraftvektor F dargestellt, der die Welle 2 mit dem Drehmittelpunkt M aus der Idealposition in die gestrichelt gezeichnete Arbeitsposition mit dem Drehmittelpunkt M' verschiebt). Da sich dies wiederum auf die gemessenen Winkelwerte MW1, MW2, MW3 auswirkt, erlaubt die Auswertung der aus der Auslenkung der Welle 2 resultierenden Abweichungen der Winkelwerte MW1, MW2, MW3 Rückschlüsse auf die auftretenden Kräfte, bzw. den dynamischen Kräfteverlauf. Insbesondere ist aus dem Verlauf der Winkelwerte MW1, MW2, MW3 ein Verlauf der Verlagerung der Welle 2 berechenbar.

Das in Figur 7 dargestellte Messsystem weist nun zwei Messanordnungen 370, 380 auf. Die Messanordnung 370 umfasst den ersten Abtastkopf 14, der mit einem Datenübertragungskanal 351 mit einer Datenschnittstelle 343 verbunden ist. Um eine Messung zu initiieren, sendet die Datenschnittstelle 343 einen Anforderungsbefehl RQW1 an den Abtastkopf 14, dieser führt daraufhin eine Messung durch und sendet den Winkelwert MW1 an die Datenschnittstelle 343. Ausgelöst wird ein Messvorgang, wie in den vorhergehenden Beispielen, durch einen Messpuls MP, der der Messanordnung 370 von der Ablaufsteuerung 46 zugeführt wird.

Die Messanordnung 380 umfasst den zweiten Abtastkopf 15 und den dritten Abtastkopf 16, die beide über einen Datenübertragungskanal 352 mit einer Busschnittstelle 344 verbunden sind. Die Busschnittstelle 344 kann mit beiden Abtastköpfen 15, 16 kommunizieren, so dass sie zum Initiieren einer Messung einen ersten Anforderungsbefehl RQW2 an den Abtastkopf 15 und einen zweiten Anforderungsbefehl RQW3 an den Abtastkopf 16 sendet. Alternativ könnte zum Initiieren der Messungen ein gemeinsamer Anforderungsbefehl vorgesehen sein, der an beide Abtastköpfe 15, 16 gesendet wird (Broadcast). Eine Busschnittstelle 344 ist somit einsetzbar, sobald wenigstens zwei digitale Messvorrichtungen, in diesem Fall die Abtastköpfe 15, 16, angeschlossen werden sollen. Die Abtastköpfe 15, 16 senden wiederum die gemessenen Winkelwerte MW2, MW3 an die Busschnittstelle 344 zurück. Im Unterschied zu bisher beschriebenen Messanordnungen ist die Messanordnung 380 somit ausgestaltet, um zwei Messwerte, konkret zwei Winkelwerte MW2, MW3 zu messen und auszugeben.

Die Datenschnittstelle 343 und die Busschnittstelle 344 sind in einem Steuergerät 340 angeordnet. Weiter umfasst das Steuergerät 340 die Ablaufsteuerung 46, den Datenkonverter 60 und die Ausgabeschnittstelle 62, die in Verbindung mit Figur 2 bereits beschrieben wurden, sowie eine Recheneinheit 64.

In diesem Ausführungsbeispiel sind die von den Messanordnungen 370, 380 gemessenen Winkelwerte MW1, MW2, MW3 nicht direkt dem Datenkonverter 60, sondern der Recheneinheit 64 zugeführt. Die Recheneinheit 64 berechnet aus dem Verlauf der Winkelwerte MW1, MW2, MW3 Zwischenwerte Z, die den Verlauf der Auslenkung der Welle 2 angeben.

Ebenso wie die Messung der Winkelwerte MW1, MW2, MW3 erfolgt die Berechnung der Zwischenwerte Z im Zeitraster der Messpulse MP. Dadurch ergibt sich eine Reihe von Zwischenwerten, die als Messwerte dem Datenkonverter 60 zugeführt sind und der sie in winkelbasierte Verlagerungsergebniswerte EV umwandelt, also auf einen Verlagerungsergebniswert EV je Sektor SEC reduziert.

Als Referenz-Winkelwert MW, der für die Bestimmung des jeweils aktuellen Sektors SEC herangezogen wird, ist dem Datenkonverter 60 in diesem Ausführungsbeispiel der vom Abtastkopf 14 gemessene Winkelwert MW1 zugeführt. Dies ist dann vorteilhaft, wenn der aus der Verlagerung der Welle 2 resultierende Messfehler bei der Messung des Winkelwerts MW1 für die weitere Auswertung tolerierbar ist.

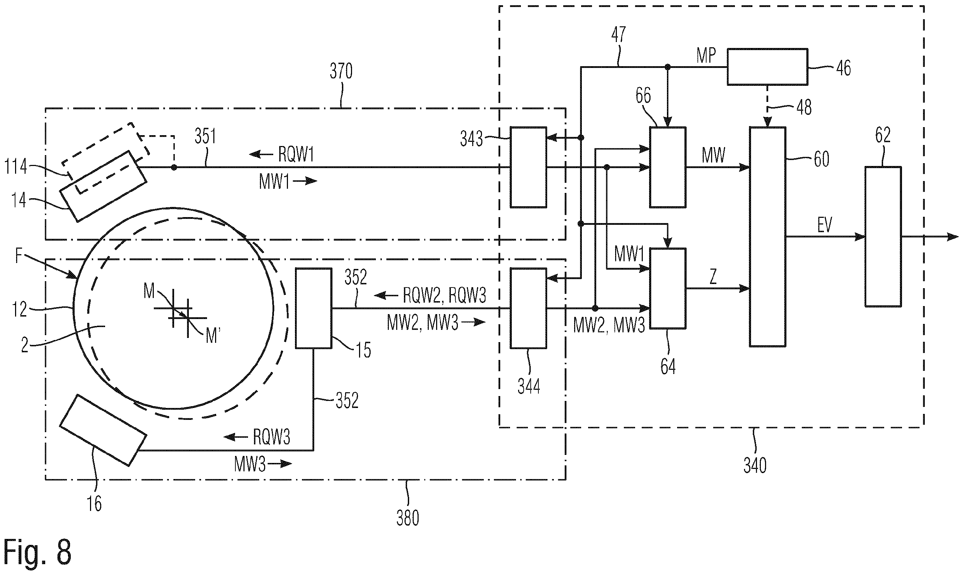

Figur 8 zeigt ein weiteres Ausführungsbeispiel eines erfindungsgemäßen Messsystems. Es unterscheidet sich vom Messsystem aus Figur 7 lediglich in der Bildung des Referenz-Winkelwerts MW. Hierzu ist im Steuergerät 440 eine zweite Recheneinheit 66 vorgesehen, der die Winkelwerte MW1, MW2, MW3 zugeführt sind. Die zweite Recheneinheit 66 berechnet, beispielsweise durch Mittelwertbildung, aus den Winkelwerten MW1, MW2, MW3 als Zwischenwert einen korrigierten Winkelwert MW, der im Datenkonverter wiederum als Referenz-Winkelwert dient. Auf diese Weise wird die Bestimmung des aktuellen Sektors SEC im Datenkonverter unabhängig von der Verlagerung der Welle, so dass eine noch höhere Genauigkeit der Ergebniswerte erreicht wird.

Selbstverständlich ist bei der Berechnung des Referenz-Winkelwerts MW der durch die Anordnung der Abtastköpfe 14, 15, 16 bedingte Versatz von 120°, bzw. 240° zwischen den Winkelwerten MW1, MW2, MW3 zu berücksichtigen.

Lediglich durch gestrichelte Linien angedeutet ist in Figur 8, dass die Mehrfach-Positionsmesseinrichtung 8 noch weitere Abtastköpfe (dargestellt ist ein vierter Abtastkopf 114) aufweisen kann. Diese können Verlagerungen der Welle, bzw. der Messteilung 12 senkrecht zur Zeichnungsebene messen, sofern die Messteilung 12 Teilungsstrukturen aufweist, die eine Messung in dieser Messrichtung erlauben. Die Messwerte der weiteren Abtastköpfe können direkt dem Datenkonverter zugeführt und dort in winkelbasierte Ergebniswerte umgewandelt werden, sie können aber auch den Recheneinheiten 64, 66 zugeführt werden, um bei der Berechnung der Zwischenwerte Z und/oder des Referenz-Winkelwerts MW berücksichtigt zu werden.

Die Kommunikation mit den weiteren Abtastköpfen kann, wie angedeutet, über eine Busverbindung (in diesem Fall ist die Datenschnittstelle 343 als Busschnittstelle auszuführen), oder über separate Datenschnittstellen erfolgen.

Alternativ kann auch jeder Messkopf 14, 15, 16 geeignet ausgestaltet sein, dass er sowohl Winkelwerte, als auch Verlagerungen senkrecht zur Zeichnungsebene misst.

Die Messköpfe 14, 15, 16 bilden, jeweils in Verbindung mit der (absolut codierten) Messteilung 12, absolute (digitale) Messvorrichtungen. Es sei darauf hingewiesen, dass alternativ auch eine Inkrementalmessteilung zum Einsatz kommen kann, so dass in Verbindung mit geeigneten Messköpfen zur Auswertung von Inkrementalsignalen ein Inkrementaldrehgeber gebildet werden kann. In konsequenter Weiterbildung ergeben sich bei Einsatz von Verarbeitungsschnittstellen an Stelle der Datenschnittstelle 343, bzw. der Busschnittstelle 344, drei Messanordnungen, die den Beispielen der Figuren 6A bzw. 6B entsprechen.

Die vorliegende Erfindung ist selbstverständlich nicht auf die beschriebenen Ausführungsbeispiele eingeschränkt, sie kann vielmehr von einem Fachmann im Rahmen der Patentansprüche alternativ ausgeführt werden.

Ebenso ist die vorliegende Erfindung nicht auf die Verwendung in Verbindung mit Werkzeugmaschinen zur Fräsbearbeitung eingeschränkt. Sie kann vorteilhaft in allen Maschinen und Anlagen eingesetzt werden, bei denen die Auswirkungen einer rotierenden Welle auf verschiedene Komponenten der zu untersuchenden Maschine oder Anlage analysiert werden sollen. Neben Maschinen zur Fräsbearbeitung können insbesondere auch Maschinen zur Schleifbearbeitung, Drehmaschinen oder Förderanlagen untersucht werden.

## Patentansprüche

1. Vorrichtung zur Verarbeitung von rotationsabhängigen Messwerten, umfassend einen Datenkonverter (60), eine Ablaufsteuerung (46) und eine Ausgabeschnittstelle (62), wobei
• die Ablaufsteuerung (46) in konstanten Zeitabständen eines Messintervalls (T) Messpulse (MP) generiert,
• dem Datenkonverter (60) in den konstanten zeitlichen Abständen des Messintervalls (T) Reihen von Messwerten (MW, MX, MS, MW1, MW2, MW3, Z) zuführbar sind, die von der Rotation einer Welle (2) abhängig sind und von denen wenigstens einer ein Winkelwert (MW, MW1, MW2, MW3) ist, der die Winkelposition der Welle (2) angibt,
• der Datenkonverter (60) ausgestaltet ist, eine Umdrehung der Welle (2) in n Sektoren (SEC) zu unterteilen und, unter Verwendung eines der Winkelwerte (MW, MW1) als Referenz-Winkelwert, eintreffende Messwerte (MW, MX, MS, MW1, MW2, MW3, Z) einem Sektor (SEC) zuzuordnen und je Umdrehung der Welle (2) für jede Reihe von Messwerten (MW, MX, MS, MW1, MW2, MW3, Z) für jeden Sektor (SEC) genau einen Ergebniswert (EW, EX, ES, EV) zu ermitteln und
• die Ergebniswerte (EW, EX, ES, EV) an die Ausgabeschnittstelle (62) ausgebbar sind.

2. Vorrichtung nach Anspruch 1, wobei die Vorrichtung weiter wenigstens eine Messanordnung (70, 80, 90, 170, 180, 190, 270, 280, 370, 380) umfasst, die eine Schnittstelle (43, 44, 45, 143, 144, 145, 243, 244, 342, 344) einen Übertragungskanal (50, 51, 52, 150, 151, 152, 250, 251, 351, 352) und eine Messvorrichtung umfasst, und der wenigstens einen Messanordnung (70, 80 90, 170, 180, 190, 270, 280, 370, 380) in den zeitlichen Abständen des Messintervalls (T) Messpulse (MP) zugeführt sind und die wenigstens eine Messanordnung (70, 80, 90, 170, 180, 190, 270, 280, 370, 380) auf das Eintreffen eines Messpulses (MP) wenigstens einen Messwert (MW, MX, MS, MW1, MW2, MW3) generiert und ausgibt.

3. Vorrichtung nach Anspruch 2, wobei die wenigstens eine Messanordnung (70, 80, 90, 170, 180, 190, 270, 280, 370) wenigstens einen Messwert (MW, MX, MS, MW1, MW2, MW3) an den Datenkonverter (60) ausgibt.

4. Vorrichtung nach einem der Ansprüche 2 oder 3, wobei die Vorrichtung weiter eine Recheneinheit (64, 66) umfasst und die wenigstens eine Messanordnung (370 380) wenigstens einen Messwert (MW1, MW2, MW3) an die Recheneinheit (64, 66) ausgibt und die Recheneinheit (64, 66) aus dem wenigstens einen Messwert (MW1, MW2, MW3) einen Zwischenwert (Z, MW) berechnet und an den Datenkonverter (60) ausgibt.

5. Vorrichtung nach einem der Ansprüche 2 bis 4, wobei eine Messanordnung (70, 80, 90, 370) der wenigstens einen Messanordnung (70, 80, 90, 370) eine Datenschnittstelle (43, 44, 45, 342) umfasst, die über einen Datenübertragungskanal (50, 51, 52, 351, 352) mit einer digitalen Messvorrichtung (5, 15, 20X, 30) verbindbar ist.

6. Vorrichtung nach einem der Ansprüche 2 bis 4, wobei eine Messanordnung (105, 120, 205, 220, 130) der wenigstens einen Messanordnung (105, 120, 205, 220, 130) eine Verarbeitungsschnittstelle (143, 144, 145, 243, 244) umfasst, die über einen Signalübertragungskanal (150, 151, 152, 250, 251) mit einem Inkrementalgeber (105, 120, 205, 220) oder einem analogen Sensor (130) verbindbar ist.

7. Vorrichtung nach einem der Ansprüche 2 bis 4, wobei eine Messanordnung (380) der wenigstens einen Messanordnung (380) eine Busschnittstelle (344) umfasst, die über einen Datenübertragungskanal (352) mit wenigstens zwei digitalen Messvorrichtungen (15, 16) verbindbar ist.

8. Verfahren zur Verarbeitung von rotationsabhängigen Messwerten mit einer Vorrichtung, umfassend einen Datenkonverter (60), eine Ablaufsteuerung (46) und eine Ausgabeschnittstelle (62), wobei
• von der Ablaufsteuerung (46) in konstanten Zeitabständen eines Messintervalls (T) Messpulse (MP) generiert werden,
• dem Datenkonverter (60) in den konstanten zeitlichen Abständen des Messintervalls (T) Reihen von Messwerten (MW, MX, MS, MW1, MW2, MW3, Z) zugeführt werden, die von der Rotation einer Welle (2) abhängig sind und von denen wenigstens einer ein Winkelwert (MW, MW1, MW2, MW3) ist, der die Winkelposition der Welle (2) angibt,
• im Datenkonverter (60) eine Umdrehung der Welle (2) in n Sektoren (SEC) unterteilt wird und, unter Verwendung eines der Winkelwerte (MW, MW1) als Referenz-Winkelwert, eintreffende Messwerte (MW, MX, MS, MW1, MW2, MW3, Z) einem Sektor (SEC) zugeordnet werden und je Umdrehung der Welle (2) für jede Reihe von Messwerten (MW, MX, MS, MW1, MW2, MW3, Z) für jeden Sektor (SEC) genau ein Ergebniswert (EW, EX, ES, EV) ermittelt wird und
• die Ergebniswerte (EW, EX, ES, EV) an die Ausgabeschnittstelle (62) ausgegeben werden.

9. Verfahren nach Anspruch 8, wobei die Vorrichtung weiter wenigstens eine Messanordnung (70, 80, 90, 170, 180, 190, 270, 280, 370, 380) umfasst, die eine Schnittstelle (43, 44, 45, 143, 144, 145, 243, 244, 342, 344) einen Übertragungskanal (50, 51, 52, 150, 151, 152, 250, 251, 351, 352) und eine Messvorrichtung umfasst, und der wenigstens einen Messanordnung (70, 80 90, 170, 180, 190, 270, 280, 370, 380) in den zeitlichen Abständen des Messintervalls (T) Messpulse (MP) zugeführt sind und die wenigstens eine Messanordnung (70, 80, 90, 170, 180, 190, 270, 280, 370, 380) auf das Eintreffen eines Messpulses (MP) wenigstens einen Messwert (MW, MX, MS, MW1, MW2, MW3) generiert und ausgibt.

10. Verfahren nach Anspruch 9, wobei die wenigstens eine Messanordnung (70, 80, 90, 170, 180, 190, 270, 280, 370) wenigstens einen Messwert (MW, MX, MS, MW1, MW2, MW3) an den Datenkonverter (60) ausgibt.

11. Verfahren nach einem der Ansprüche 9 oder 10, wobei die Vorrichtung weiter eine Recheneinheit (64, 66) umfasst und die wenigstens eine Messanordnung (370 380) wenigstens einen Messwert (MW1, MW2, MW3) an die Recheneinheit (64, 66) ausgibt und die Recheneinheit (64, 66) aus dem wenigstens einen Messwert (MW1, MW2, MW3) einen Zwischenwert (Z, MW) berechnet und an den Datenkonverter (60) ausgibt.

12. Verfahren nach einem der Ansprüche 9 bis 11, wobei eine Messanordnung (70, 80, 90, 370) der wenigstens einen Messanordnung eine Datenschnittstelle (43, 44, 45, 342) umfasst, die über einen Datenübertragungskanal (50, 51, 52, 351, 352) mit einer digitalen Messvorrichtung (5, 15, 20X, 30) verbunden wird.

13. Verfahren nach einem der Ansprüche 9 bis 11, wobei eine Messanordnung (105, 120, 205, 220, 130) Z. der wenigstens einen Messanordnung eine Verarbeitungsschnittstelle (143, 144, 145, 243, 244) umfasst, die über einen Signalübertragungskanal (150, 151, 152, 250, 251) mit einem Inkrementalgeber (105, 120, 205, 220) oder einem analogen Sensor (130) verbunden wird.

14. Verfahren nach einem der Ansprüche 9 bis 11, wobei eine Messanordnung (380) der wenigstens einen Messanordnung eine Busschnittstelle (344) umfasst, die über einen Datenübertragungskanal (352) mit wenigstens zwei digitalen Messvorrichtungen (15, 16) verbunden wird.

15. Verfahren nach einem der Ansprüche 8 bis 14, wobei die Zuordnung der Messwerte (MW, MX, MS, MW1, MW2, MW3, Z) zu Sektoren (SEC) zur Bildung von Ergebniswerten (EW, EX, ES, EV) nach wenigstens einem der folgenden Verfahren erfolgt:
• Wahl des ersten Messwerts (MW, MX, MS) nach, oder des letzten Messwerts (MW, MX, MS) vor einem Sektorwechsel als Ergebniswert (EW, EX, ES),
• Bildung des Mittelwerts aus allen Messwerten (MW, MX, MS) innerhalb eines Sektors (SEC) als Ergebniswert (EW, EX, ES),
• Berechnung eines virtuellen Messwertes bezogen auf die Winkelposition in der Mitte des aktuellen Sektors (SEC) aus wenigstens zwei Messwerten (MW, MX, MS) innerhalb des Sektors (SEC) als Ergebniswert (EW, EX, ES).

## Claims

1. Apparatus for processing rotation-dependent measured values, comprising a data converter (60), a sequential control system (46) and an output interface (62), wherein
• the sequential control system (46) generates measurement pulses (MP) at constant time intervals of a measurement interval (T),
• series of measured values (MW, MX, MS, MW1, MW2, MW3, Z) are able to be supplied to the data converter (60) at the constant intervals of time of the measurement interval (T), which measured values are dependent on the rotation of a shaft (2) and at least one of which is an angle value (MW, MW1, MW2, MW3) indicating the angular position of the shaft (2),
• the data converter (60) is configured to subdivide a revolution of the shaft (2) into n sectors (SEC) and, using one of the angle values (MW, MW1) as a reference angle value, to assign arriving measured values (MW, MX, MS, MW1, MW2, MW3, Z) to a sector (SEC) and to ascertain precisely one result value (EW, EX, ES, EV) for each sector (SEC) per revolution of the shaft (2) for each series of measured values (MW, MX, MS, MW1, MW2, MW3, Z) and
• the result values (EW, EX, ES, EV) are able to be output to the output interface (62).

2. Apparatus according to Claim 1, wherein the apparatus further comprises at least one measuring arrangement (70, 80, 90, 170, 180, 190, 270, 280, 370, 380) which comprises an interface (43, 44, 45, 143, 144, 145, 243, 244, 342, 344), a transmission channel (50, 51, 52, 150, 151, 152, 250, 251, 351, 352) and a measuring apparatus, and the at least one measuring arrangement (70, 80, 90, 170, 180, 190, 270, 280, 370, 380) is supplied with measurement pulses (MP) at the intervals of time of the measurement interval (T) and, in response to a measurement pulse (MP) arriving, the at least one measuring arrangement (70, 80, 90, 170, 180, 190, 270, 280, 370, 380) generates and outputs at least one measured value (MW, MX, MS, MW1, MW2, MW3).

3. Apparatus according to Claim 2, wherein the at least one measuring arrangement (70, 80, 90, 170, 180, 190, 270, 280, 370) outputs at least one measured value (MW, MX, MS, MW1, MW2, MW3) to the data converter (60).

4. Apparatus according to either of Claims 2 and 3, wherein the apparatus further comprises a computing unit (64, 66) and the at least one measuring arrangement (370, 380) outputs at least one measured value (MW1, MW2, MW3) to the computing unit (64, 66) and the computing unit (64, 66) computes an intermediate value (Z, MW) from the at least one measured value (MW1, MW2, MW3) and outputs it to the data converter (60).

5. Apparatus according to one of Claims 2 to 4, wherein one measuring arrangement (70, 80, 90, 370) of the at least one measuring arrangement (70, 80, 90, 370) comprises a data interface (43, 44, 45, 342) which is able to be connected to a digital measuring apparatus (5, 15, 20X, 30) via a data transmission channel (50, 51, 52, 351, 352) .

6. Apparatus according to one of Claims 2 to 4, wherein one measuring arrangement (105, 120, 205, 220, 130) of the at least one measuring arrangement (105, 120, 205, 220, 130) comprises a processing interface (143, 144, 145, 243, 244) which is able to be connected to an incremental encoder (105, 120, 205, 220) or to an analogue sensor (130) via a signal transmission channel (150, 151, 152, 250, 251).

7. Apparatus according to one of Claims 2 to 4, wherein one measuring arrangement (380) of the at least one measuring arrangement (380) comprises a bus interface (344) which is able to be connected to at least two digital measuring apparatuses (15, 16) via a data transmission channel (352).

8. Method for processing rotation-dependent measured values, having an apparatus comprising a data converter (60), a sequential control system (46) and an output interface (62), wherein
• measurement pulses (MP) are generated by the sequential control system (46) at constant time intervals of a measurement interval (T),
• series of measured values (MW, MX, MS, MW1, MW2, MW3, Z) are supplied to the data converter (60) at the constant intervals of time of the measurement interval (T), which measured values are dependent on the rotation of a shaft (2) and at least one of which is an angle value (MW, MW1, MW2, MW3) indicating the angular position of the shaft (2),
• a revolution of the shaft (2) is subdivided into n sectors (SEC) in the data converter (60) and, using one of the angle values (MW, MW1) as a reference angle value, arriving measured values (MW, MX, MS, MW1, MW2, MW3, Z) are assigned to a sector (SEC) and precisely one result value (EW, EX, ES, EV) is ascertained for each sector (SEC) per revolution of the shaft (2) for each series of measured values (MW, MX, MS, MW1, MW2, MW3, Z) and
• the result values (EW, EX, ES, EV) are output to the output interface (62).

9. Method according to Claim 8, wherein the apparatus further comprises at least one measuring arrangement (70, 80, 90, 170, 180, 190, 270, 280, 370, 380) which comprises an interface (43, 44, 45, 143, 144, 145, 243, 244, 342, 344), a transmission channel (50, 51, 52, 150, 151, 152, 250, 251, 351, 352) and a measuring apparatus, and the at least one measuring arrangement (70, 80, 90, 170, 180, 190, 270, 280, 370, 380) is supplied with measurement pulses (MP) at the intervals of time of the measurement interval (T) and, in response to a measurement pulse (MP) arriving, the at least one measuring arrangement (70, 80, 90, 170, 180, 190, 270, 280, 370, 380) generates and outputs at least one measured value (MW, MX, MS, MW1, MW2, MW3).

10. Method according to Claim 9, wherein the at least one measuring arrangement (70, 80, 90, 170, 180, 190, 270, 280, 370) outputs at least one measured value (MW, MX, MS, MW1, MW2, MW3) to the data converter (60).

11. Method according to either of Claims 9 and 10, wherein the apparatus further comprises a computing unit (64, 66) and the at least one measuring arrangement (370, 380) outputs at least one measured value (MW1, MW2, MW3) to the computing unit (64, 66) and the computing unit (64, 66) computes an intermediate value (Z, MW) from the at least one measured value (MW1, MW2, MW3) and outputs it to the data converter (60).

12. Method according to one of Claims 9 to 11, wherein one measuring arrangement (70, 80, 90, 370) of the at least one measuring arrangement comprises a data interface (43, 44, 45, 342) which is connected to a digital measuring apparatus (5, 15, 20X, 30) via a data transmission channel (50, 51, 52, 351, 352).

13. Method according to one of Claims 9 to 11, wherein one measuring arrangement (105, 120, 205, 220, 130) of the at least one measuring arrangement comprises a processing interface (143, 144, 145, 243, 244) which is connected to an incremental encoder (105, 120, 205, 220) or to an analogue sensor (130) via a signal transmission channel (150, 151, 152, 250, 251).

14. Method according to one of Claims 9 to 11, wherein one measuring arrangement (380) of the at least one measuring arrangement comprises a bus interface (344) which is connected to at least two digital measuring apparatuses (15, 16) via a data transmission channel (352) .

15. Method according to one of Claims 8 to 14, wherein the measured values (MW, MX, MS, MW1, MW2, MW3, Z) are assigned to sectors (SEC) to form result values (EW, EX, ES, EV) using at least one of the following methods:
• selecting the first measured value (MW, MX, MS) after, or the last measured value (MW, MX, MS) before, a sector change as the result value (EW, EX, ES),
• taking the average of all of the measured values (MW, MX, MS) within a sector (SEC) as the result value (EW, EX, ES),
• computing a virtual measured value based on the angular position in the centre of the present sector (SEC) from at least two measured values (MW, MX, MS) within the sector (SEC) as the result value (EW, EX, ES).

## Revendications

1. Dispositif de traitement de valeurs mesurées dépendantes d'une rotation, comprenant un convertisseur de données (60), une commande séquentielle (46) et une interface de sortie (62),
* la commande séquentielle (46) générant des impulsions de mesure (MP) dans des laps de temps constants d'un intervalle de mesure (T),
* des séries de valeurs mesurées (MW, MX, MS, MW1, MW2, MW3, Z) pouvant être acheminées au convertisseur de données (60) dans les laps de temps constants de l'intervalle de mesure (T), lesquelles dépendent de la rotation d'un arbre (2) et parmi lesquelles au moins l'une est une valeur d'angle (MW, MW1, MW2, MW3) qui indique la position angulaire de l'arbre (2),
* le convertisseur de données (60) étant configuré pour subdiviser un tour de l'arbre (2) en n secteurs (SEC) en utilisant l'une des valeurs d'angle (MW, MW1) en tant que valeur d'angle de référence, affecter les valeurs mesurées (MW, MX, MS, MW1, MW2, MW3, Z) arrivantes à un secteur (SEC) et à chaque tour de l'arbre (2), identifier exactement une valeur de résultat (EW, EX, ES, EV) pour chaque série de valeurs mesurées (MW, MX, MS, MW1, MW2, MW3, Z) pour chaque secteur (SEC) et
* les valeurs de résultat (EW, EX, ES, EV) pouvant être délivrées sur l'interface de sortie (62).

2. Dispositif selon la revendication 1, le dispositif comportant au moins un arrangement de mesure (70, 80, 90, 170, 180, 190, 270, 280, 370, 380), lequel comprend une interface (43, 44, 45, 143, 144, 145, 243, 244, 342, 344) d'un canal de transmission (50, 51, 52, 150, 151, 152, 250, 251, 351, 352) et un dispositif de mesure, et les impulsions de mesure (MP) étant acheminées à l'au moins un arrangement de mesure (70, 80, 90, 170, 180, 190, 270, 280, 370, 380) dans les laps de temps de l'intervalle de mesure (T) et l'au moins un arrangement de mesure (70, 80, 90, 170, 180, 190, 270, 280, 370, 380), lors de l'arrivée d'une impulsion de mesure (MP), générant et délivrant au moins une valeur mesurée (MW, MX, MS, MW1, MW2, MW3, Z).

3. Dispositif selon la revendication 2, l'au moins un arrangement de mesure (70, 80, 90, 170, 180, 190, 270, 280, 370, 380) délivrant au moins une valeur mesurée (MW, MX, MS, MW1, MW2, MW3, Z) au convertisseur de données (60) .

4. Dispositif selon l'une des revendications 2 ou 3, le dispositif comprenant en outre une unité de calcul (64, 66) et l'au moins un arrangement de mesure (370, 380) délivrant au moins une valeur mesurée (MW1, MW2, MW3) à l'unité de calcul (64, 66) et l'unité de calcul (64, 66) calculant une valeur intermédiaire (Z, MW) à partir de l'au moins une valeur mesurée (MW1, MW2, MW3) et la délivrant au convertisseur de données (60).

5. Dispositif selon l'une des revendications 2 à 4, un arrangement de mesure (70, 80, 90, 370) de l'au moins un arrangement de mesure (70, 80, 90, 370) comportant une interface de données (43, 44, 45, 342), laquelle peut être reliée à un dispositif de mesure numérique (5, 15, 20X, 30) par le biais d'un canal de transmission de données (50, 51, 52, 351, 352).

6. Dispositif selon l'une des revendications 2 à 4, un arrangement de mesure (105, 120, 205, 220, 130) de l'au moins un arrangement de mesure (105, 120, 205, 220, 130) comportant une interface de traitement (143, 144, 145, 243, 244), laquelle peut être reliée à un codeur incrémental (102, 120, 205, 220) ou un capteur analogique (130) par le biais d'un canal de transmission de signal (150, 151, 152, 250, 251).

7. Dispositif selon l'une des revendications 2 à 4, un arrangement de mesure (380) de l'au moins un arrangement de mesure (380) comportant une interface de bus (344), laquelle peut être reliée à au moins deux dispositifs de mesure numériques (15, 16) par le biais d'un canal de transmission de signal (352).

8. Procédé de traitement de valeurs mesurées dépendantes d'une rotation, comprenant un convertisseur de données (60), une commande séquentielle (46) et une interface de sortie (62),
* des impulsions de mesure (MP) étant générées par la commande séquentielle (46) dans des laps de temps constants d'un intervalle de mesure (T),
* des séries de valeurs mesurées (MW, MX, MS, MW1, MW2, MW3, Z) étant acheminées au convertisseur de données (60) dans les laps de temps constants de l'intervalle de mesure (T), lesquelles dépendent de la rotation d'un arbre (2) et parmi lesquelles au moins l'une est une valeur d'angle (MW, MW1, MW2, MW3) qui indique la position angulaire de l'arbre (2),
* un tour de l'arbre (2) étant subdivisé en n secteurs (SEC) dans le convertisseur de données (60) en utilisant l'une des valeurs d'angle (MW, MW1) en tant que valeur d'angle de référence, les valeurs mesurées (MW, MX, MS, MW1, MW2, MW3, Z) arrivantes étant affectées à un secteur (SEC) et à chaque tour de l'arbre (2), exactement une valeur de résultat (EW, EX, ES, EV) étant identifiée pour chaque série de valeurs mesurées (MW, MX, MS, MW1, MW2, MW3, Z) pour chaque secteur (SEC) et
* les valeurs de résultat (EW, EX, ES, EV) étant délivrées sur l'interface de sortie (62).

9. Procédé selon la revendication 8, le dispositif comportant au moins un arrangement de mesure (70, 80, 90, 170, 180, 190, 270, 280, 370, 380), lequel comprend une interface (43, 44, 45, 143, 144, 145, 243, 244, 342, 344) d'un canal de transmission (50, 51, 52, 150, 151, 152, 250, 251, 351, 352) et un dispositif de mesure, et des impulsions de mesure (MP) étant acheminées à l'au moins un arrangement de mesure (70, 80, 90, 170, 180, 190, 270, 280, 370, 380) dans les laps de temps de l'intervalle de mesure (T) et l'au moins un arrangement de mesure (70, 80, 90, 170, 180, 190, 270, 280, 370, 380), lors de l'arrivée d'une impulsion de mesure (MP), générant et délivrant au moins une valeur mesurée (MW, MX, MS, MW1, MW2, MW3, Z).

10. Procédé selon la revendication 9, l'au moins un arrangement de mesure (70, 80, 90, 170, 180, 190, 270, 280, 370, 380) délivrant au moins une valeur mesurée (MW, MX, MS, MW1, MW2, MW3, Z) au convertisseur de données (60) .

11. Procédé selon l'une des revendications 9 ou 10, le dispositif comprenant en outre une unité de calcul (64, 66) et l'au moins un arrangement de mesure (370, 380) délivrant au moins une valeur mesurée (MW1, MW2, MW3) à l'unité de calcul (64, 66) et l'unité de calcul (64, 66) calculant une valeur intermédiaire (Z, MW) à partir de l'au moins une valeur mesurée (MW1, MW2, MW3) et la délivrant au convertisseur de données (60).

12. Procédé selon l'une des revendications 9 à 11, un arrangement de mesure (70, 80, 90, 370) de l'au moins un arrangement de mesure comportant une interface de données (43, 44, 45, 342), laquelle est reliée à un dispositif de mesure numérique (5, 15, 20X, 30) par le biais d'un canal de transmission de données (50, 51, 52, 351, 352).

13. Procédé selon l'une des revendications 9 à 11, un arrangement de mesure (105, 120, 205, 220, 130) de l'au moins un arrangement de mesure comportant une interface de traitement (143, 144, 145, 243, 244), laquelle est reliée à un codeur incrémental (102, 120, 205, 220) ou un capteur analogique (130) par le biais d'un canal de transmission de signal (150, 151, 152, 250, 251).

14. Procédé selon l'une des revendications 9 à 11, un arrangement de mesure (380) de l'au moins un arrangement de mesure comportant une interface de bus (344), laquelle est reliée à au moins deux dispositifs de mesure numériques (15, 16) par le biais d'un canal de transmission de signal (352).

15. Procédé selon l'une des revendications 8 à 14, l'affectation des valeurs mesurées (MW, MX, MS, MW1, MW2, MW3, Z) à des secteurs (SEC) en vue de former des valeurs de résultat (EW, EX, ES, EV) s'effectuant selon au moins l'un des procédés suivants :
* sélection de la première valeur mesurée (MW, MX, MS) après, ou de la dernière valeur mesurée (MW, MX, MS) avant un changement de secteur en tant que valeur de résultat (EW, EX, ES),
* formation de la valeur moyenne de toutes les valeurs mesurées (MW, MX, MS) à l'intérieur d'un secteur (SEC) en tant que valeur de résultat (EW, EX, ES),
* calcul d'une valeur mesurée virtuelle en référence à la position angulaire au centre du secteur (SEC) actuel à partir d'au moins deux valeurs mesurées (MW, MX, MS) à l'intérieur du secteur (SEC) en tant que valeur de résultat (EW, EX, ES).
